# EUROPÄISCHE PATENTSCHRIFT

(11) **EP 3 262 324 B1**
(45) Veröffentlichungstag und Bekanntmachung des Hinweises auf die Patenterteilung: **17.08.2022**
(21) Anmeldenummer: 15817403.7
(22) Anmeldetag: 28.12.2015
(51) Int. Cl.: F16K 1/44, G01M 3/32

(54) **ANORDNUNG UND VERFAHREN ZUR DICHTHEITSÜBERPRÜFUNG EINES BEHÄLTNISSES**
ARRANGEMENT AND METHOD FOR TESTING THE TIGHTNESS OF A CONTAINER
AGENCEMENT ET PROCÉDÉ DE CONTRÔLE D'ÉTANCHÉITÉ D'UN RÉCIPIENT

(30) Priorität: 27.02.2015 DE 102015203552
(43) Veröffentlichungstag der Anmeldung: 03.01.2018
(73) Patentinhaber: Syntegon Technology GmbH, 71332 Waiblingen (DE)
(72) Erfinder: MAURISCHAT, Wolfgang, 74589 Satteldorf (DE)
(74) Vertreter: DREISS Patentanwälte PartG mbB
(86) Internationale Anmeldenummer: PCT/EP2015/081294
(87) Internationale Veröffentlichungsnummer: WO 2016/134809

(56) Entgegenhaltungen:
- EP-A1- 2 711 595
- WO-A1-92/17721
- WO-A1-2005/036039
- WO-A1-2008/082199
- WO-A2-2004/059474
- US-A- 3 792 607
- US-A1- 2015 362 419

## Beschreibung

### Stand der Technik

Die vorliegende Erfindung betrifft eine Anordnung und ein Verfahren zur Überprüfung einer Dichtheit eines Behältnisses, insbesondere im Rahmen einer Qualitätsprüfung von Verpackungsbehältern.

Im Rahmen einer Qualitätsprüfung von verschlossenen Behältnissen wird als technisches Verfahren eine Dichtheitsprüfung mit Überdruck oder mit Unterdruck angewendet. Insbesondere im Bereich von Medikamenten-Verpackungen ist eine Dichtheitsprüfung unerlässlich. Hierzu wird das Behältnis in einer Prüfkammer angeordnet, welche unter Vakuum gesetzt wird. Dann wird ein Druckanstieg pro Zeiteinheit im Vakuumbereich gemessen. Wenn der Vakuumdruck konstant bleibt oder gleich zu einem dichten Referenzteil, ist dies ein Kennzeichen für die Dichtheit des Behältnisses. Steigt der Vakuumdruck während der Messzeit an, ist dies bei einer dichten Prüfkammer ein Zeichen für eine Undichtheit des Behältnisses. In gleicher Weise ist bei einer Überdruckkammer eine Reduzierung des Überdrucks in der Prüfkammer ein Hinweis auf ein undichtes Behältnis. Ein Problem bei der Messung der absoluten Druckhöhe liegt jedoch darin, dass, je kleiner die vorhandenen Undichtigkeiten im Behältnis sind, desto kleiner auch der Leckagestrom ist, der bei der aufgebauten Druckdifferenz zwischen dem Behältnisinnenraum und der Prüfkammer vorhanden ist. Da ein erreichbares Unterdruckniveau und damit auch eine Druckdifferenz über die Leckagestelle technisch begrenzt ist, kann man entweder mit sehr langen Messzeiten arbeiten oder alternativ mit sehr präzisen, teuren Druckaufnehmern. Weiterhin ist aus der EP 0313678 B1 ein Verfahren und eine Anordnung zur Dichteprüfung eines Hohlkörpers in einer Prüfkammer bekannt, bei der eine Druckdifferenz mittels eines Differenzdrucksensors zwischen einem Referenzdrucksystem und der Prüfkammer gemessen und ausgewertet wird. Ferner ist aus US 3 792 607 A eine Anordnung zur Überprüfung einer Dichtheit eines Behältnisses gemäß dem Oberbegriff des Anspruchs 1 bekannt. Ferner zeigen die Druckschriften WO 2005/036039 A1 und die WO 2004/059474 A2 Membranventile zum Steuern von Fluiden. Es wäre daher wünschenswert, eine verbesserte und insbesondere kompaktere und technisch einfache Lösung zur Überprüfung einer Dichtheit eines Behältnisses zu haben.

### Offenbarung der Erfindung

Die erfindungsgemäße Anordnung zur Überprüfung einer Dichtheit eines Behältnisses mit den Merkmalen des Anspruchs 1 weist demgegenüber den Vorteil auf, dass eine kompakte und sichere Erfassung einer Undichtheit eines Behältnisses möglich ist. Erfindungsgemäß wird hierbei ein einziges Ventil verwendet, welches ein Schließelement und einen ersten und zweiten Dichtsitz aufweist. Dadurch können mit einem Hub des Schließelements zwei Ventilfunktionen realisiert werden. Erfindungsgemäß kann dadurch mittels eines Differenzdrucksensors eine Differenzdruckmessung zwischen einer Prüfkammer, in welcher das zu prüfende Behältnis angeordnet ist, und einem Referenzraum, welcher zu Beginn der Messung den gleichen Druck wie in der Prüfkammer aufweist, bestimmt werden. Sollte das Behältnis einen Riss oder dgl. aufweisen, würde bei einem Unterdruck in der Prüfkammer eine Leckage aus dem Behältnis in die Prüfkammer austreten, so dass sich das Druckniveau des Unterdrucks ändern würde, was mittels des Differenzdrucksensors zum Referenzraum erfassbar wäre. Wenn ein Überdruck in der Prüfkammer erzeugt wird, würde bei einem Riss oder dgl., im Behältnis Druck aus der Prüfkammer in das innere des Behältnisses gelangen, so dass der Druck in der Prüfkammer sinken würde. Dies kann ebenfalls mittels des Differenzdrucksensors in Relation zum Referenzraum erfasst werden. Die Verwendung des Differenzdrucksensors kann dabei einfach und unabhängig von einer Höhe des Druckniveaus in der Prüfkammer ausgeführt werden, so dass die Prüfung schnell und kostengünstig durchgeführt werden kann, da beispielsweise kein sehr hoher Überdruck bzw. kein absolutes Vakuum in der Prüfkammer erzeugt werden muss. Eine Änderung des Drucks in der Prüfkammer kann erfindungsgemäß mittels einer Druckänderungseinrichtung, beispielsweise einem Verdichter oder einer Saugeinrichtung erreicht werden. Die erfindungsgemäße Anordnung ist dabei insbesondere auch zur Überprüfung von Produkten in großer Zahl geeignet.

Die Unteransprüche zeigen bevorzugte Weiterbildungen der Erfindung.

Vorzugsweise sind das erste und/oder zweite Dichtelement am Schließelement angeordnet. Dadurch kann ein besonders kompakter und einfacher Aufbau realisiert werden. Ferner sind das erste und zweite Dichtelement vorzugsweise Elastomere. Dadurch kann eine besonders gute Abdichtung von Prüfkammer und Referenzraum ermöglicht werden.

Um insbesondere eine gleichzeitige Abdichtung am ersten und zweiten Dichtsitz zu ermöglichen, weisen das erste und zweite Dichtelement jeweils einen gleichen Querschnitt auf. Vorzugsweise sind die Querschnitte kreisförmig und das erste und zweite Dichtelement als Dichtringe ausgebildet.

Gemäß einer alternativen Ausgestaltung der vorliegenden Erfindung sind das erste und zweite Dichtelement koaxial zu einer Mittelachse des Ventils angeordnet. Dadurch kann auf einfache Weise ein symmetrischer Ventilaufbau zu einer Ventilachse ermöglicht werden.

Um ein gleichzeitiges Öffnen und Schließen mittels des Ventils zu erreichen, sind das erste und zweite Dichtelement als Dichtringe mit gleicher Schnurdicke ausgebildet. Um ein zeitlich beabstandetes Schließen am ersten und zweiten Dichtsitz auf einfache Weise zu realisieren, weisen das erste und zweite Dichtelement vorzugweise eine unterschiedliche Schnurdicke auf. Dadurch kann ein zeitlich versetztes Schließen der Prüfkammer und des Referenzraums ermöglicht werden. Weiterhin kann dadurch insbesondere vor der Trennung zwischen dem Referenzraum und der Prüfkammer noch ein Druckausgleich zwischen dem Referenzraum und der Prüfkammer erfolgen, bevor eine Abdichtung zwischen Prüfkammer und Referenzraum durch den zweiten Dichtsitz erfolgt.

Gemäß einer weiteren bevorzugten Ausgestaltung der vorliegenden Erfindung umfasst die Anordnung ferner ein mit dem Vorraum verbundenes Füllventil und/oder ein mit dem Vorraum verbundenes Entlüftungsventil und/oder einen Absolutdrucksensor zum Messen eines absoluten Drucks im Vorraum. Hierbei bewirkt das Füllventil das Herstellen eines Unterdrucks in der Vorkammer und nach einem Öffnen des Ventils auch das Herstellen des Unterdrucks in der Prüfkammer und im Referenzraum. Das Entlüftungsventil bewirkt das Vorbefüllen der Vorkammer mit einem einstellbaren Überdruck, wozu bevorzugt ein Druckregler vorgesehen ist. Nach dem öffnen des Ventils wird über das Entlüftungsventil auch die Prüfkammer und der Referenzraum wieder mit Druck befüllt.

Der an der Vorkammer angeordnete Absolutdrucksensor dient zur Realisierung einer vorgelagerten oder einer nachgelagerten Grobleckprüfung in Ergänzung zu der Feinmessung. Wenn das Behältnis ein großes Leck aufweist, dann wird der Druck des Gasvolumens im Behältnis am Beginn der Feinmessung sehr schnell ausgeglichen sein und es wird sich durch die länger andauernde Feinmessung keine Leckage wegen des bereits sehr schnell abgeschlossenen Druckausgleiches messen lassen. Die Grobleckprüfung dient somit zur Plausibilisierung des Ergebnisses der Feinleckmessung.

Für die Grobleckprüfung wird die Vorkammer genutzt, um diese volumenseitig definierte Kammer mit einem gegenüber der Prüfkammer verschiedenen Druck vorzufüllen, dann gegen die Druckänderungseinrichtung abzusperren und dann mit der Prüfkammer zu verbinden. Dafür liefert der an der Vorkammer angeordnete Absolutdrucksensor die Information über den in der Vorkammer herrschenden Druck, was in Verbindung mit der Kenntnis des Volumens der Prüfkammer und dem dort herrschenden Umgebungsdruck zur Ermittlung eines Referenzdruckes für eine Grobleckbewertung herangezogen wird. Nach der Verbindung der Vorkammer mit der Prüfkammer durch Öffnen des Messventiles wird sich ein gemeinsamer gleicher Druck in beiden Kammern einstellen, der zwischen den beiden Ausgangsdrücken liegt. Ist ein Grobleck in dem zu prüfenden Behältnis vorhanden, wird der sich einstellende gemeinsame Druck anders sein, als wenn das zu prüfende Behältnis kein Grobleck aufweist, weil das zusätzliche Gasvolumen im Behältnis ein zusätzliches Ausgleichsvolumen für den entstehenden gemeinsamen Druck darstellt. Zur Ermittlung des sich nach der Kammerverbindung einstellenden gemeinsamen Druckes wird ebenfalls der Absolutdrucksensor an der Vorkammer genutzt.

Diese Grobleckmessung kann vor dem Feinmessprozess stattfinden, d.h., ist vorgelagert. Dann wird das Vorvolumen entweder mit einem Überdruck gegenüber der Prüfkammer gefüllt oder das Vorvolumen wird auf einen Vakuumdruck abgepumpt und damit auf einen Unterdruck gegenüber der Prüfkammer. Der Vorteil der vorgelagerten Grobleckmessung besteht darin, daß bei Erkennen eines Groblecks der Feinmessvorgang nicht durchgeführt wird und damit ein Einsaugen von Substanzen aus dem Behältnis in die Prüfeinrichtung vermieden werden kann.

Diese Grobleckmessung kann auch nach der Feinmessung stattfinden, d.h., ist nachgelagert. Dann wird das Vorvolumen parallel zum Feinmessvorgang mit einem von der Prüfkammer abweichenden Druck, z.B. mit Überdruck gefüllt und die Kammervereinigung findet nach dem Feinmessvorgang statt. Der Vorteil dieser Methode liegt in der Zeitersparnis wegen dem Parallelablauf.

Gemäß einer weiteren bevorzugten Ausgestaltung der vorliegenden Erfindung sind alle Bauteile der Anordnung in einem Ventilblock integriert. Dadurch kann ein besonders kompakter Aufbau erreicht werden.

Ferner betrifft die vorliegende Erfindung ein Verfahren zur Überprüfung einer Dichtheit eines Behältnisses, welches in einer Prüfkammer angeordnet ist. Das Verfahren umfasst dabei die Schritte des Änderns eines Drucks in der Prüfkammer und einem mit der Prüfkammer verbundenen Referenzraum, das Abdichten der Prüfkammer und des Referenzraums mittels eines einzigen Ventils mit einem ersten und zweiten Dichtsitz, wobei die Prüfkammer im ersten Dichtsitz abgedichtet wird und der Referenzraum am zweiten Dichtsitz abgedichtet wird, und das Messen eines Differenzdrucks zwischen der Prüfkammer und dem Referenzraum mittels eines Differenzdrucksensors. Der Differenzdrucksensor kann somit einen Druckunterschied zwischen der Prüfkammer und dem Referenzraum erfassen und somit eine mögliche Undichtigkeit des Behältnisses bestimmen.

Das erfindungsgemäße Verfahren schließt vorzugsweise gleichzeitig die Prüfkammer und den Referenzraum gegenüber einem Vorraum ab. Alternativ erfolgt ein Abdichten der Prüfkammer und des Referenzraums gegenüber einer Vorkammer jeweils nacheinander. Dabei kann die Prüfkammer und der Referenzraum zuerst mittels eines am Ventil vorgesehenen ersten Dichtsitzes gegenüber dem Vorraum abgedichtet werden, wobei die Prüfkammer und der Referenzraum noch miteinander in Verbindung stehen. Dadurch wird sichergestellt, dass ein Druckniveau in der Prüfkammer und im Referenzraum sicher gleich ist. Anschließend wird dann die Prüfkammer vom Referenzraum am zweiten Dichtsitz abgedichtet. Die Nacheinander-Abdichtung kann dabei einfach durch unterschiedliche Schnurdicken der Dichtelemente am Ventil realisiert werden.

### Zeichnung

Nachfolgend werden bevorzugte Ausführungsbeispiele der Erfindung unter Bezugnahme auf die begleitende Zeichnung im Detail beschrieben. Gleiche bzw. funktional gleiche Bauteile sind dabei mit den gleichen Bezugszeichen bezeichnet. In der Zeichnung ist:
- Figur 1: eine schematische Darstellung einer erfindungsgemäßen Anordnung 1 gemäß einem ersten Ausführungsbeispiel der Erfindung,
- Figur 2: eine schematische Schnittansicht der Anordnung von Figur 1,
- Figur 3: eine schematische Schnittansicht entlang der Linie A-A von Figur 2,
- Figur 4: eine schematische Schnittansicht einer Anordnung gemäß einem zweiten Ausführungsbeispiel der Erfindung,
- Figur 5: eine schematische Schnittansicht entlang der Linie B-B von Figur 4,
- Figur 6: eine schematische, vergrößerte Ansicht der Anordnung von Figur 4,
- Figur 7: eine schematische Schnittansicht einer Anordnung gemäß einem dritten Ausführungsbeispiel der Erfindung,
- Figur 8: eine schematische Darstellung einer Anordnung gemäß einem vierten Ausführungsbeispiel der Erfindung, und
- Figur 9: eine schematische Schnittansicht der Anordnung von Figur 8.

### Bevorzugte Ausführungsformen der Erfindung

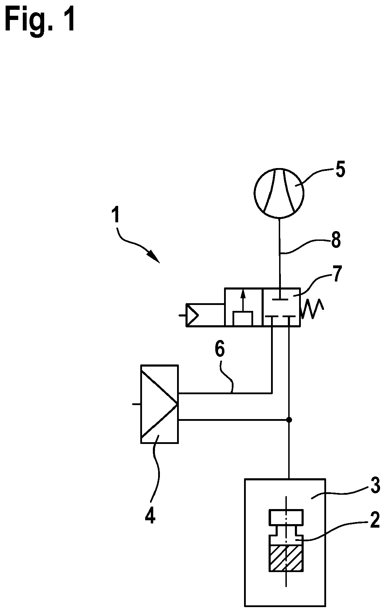

Nachfolgend wird unter Bezugnahme auf die Figuren 1 bis 3 eine Anordnung 1 gemäß einem ersten Ausführungsbeispiel der Erfindung im Detail beschrieben.

Wie aus der schematischen Darstellung von Figur 1 ersichtlich ist, umfasst die erfindungsgemäße Anordnung 1 zur Überprüfung einer Dichtheit eines Behältnisses 2 eine abdichtbare Prüfkammer 3, in welcher das zu prüfende Behältnis anordenbar ist. Das zu prüfende Behältnis ist beispielsweise ein mit einem Medikament gefülltes Vial oder dgl.

Die Anordnung 1 umfasst ferner eine Druckänderungseinrichtung 5, welche in diesem Ausführungsbeispiel ein Verdichter ist. Mittels der Druckänderungseinrichtung 5 wird ein Druck in der Prüfkammer relativ zu einem Druck im Behältnis geändert. Hierbei kann ein Unterdruck oder auch ein Überdruck in der Prüfkammer 3 erzeugt werden. In diesem Ausführungsbeispiel ist die Prüfkammer 3 an der Saugseite des Verdichters angeschlossen. Üblicherweise herrscht im Behältnis Umgebungsdruck und in der Prüfkammer herrscht nach Einbringen des Behältnisses ebenfalls Umgebungsdruck.

Weiterhin ist erfindungsgemäß ein Differenzdrucksensor 4 vorgesehen, welcher zur Bestimmung einer Druckdifferenz zwischen einem Referenzdruck in einem Referenzraum 6 und einem Druck in der Prüfkammer 3 ausgebildet ist. Der Differenzdrucksensor 4 soll dabei Druckdifferenzen im Verlauf der Messung zwischen dem Referenzraum 6 und der Prüfkammer 3 erfassen.

Ferner umfasst die erfindungsgemäße Anordnung 1 ein Ventil 7 mit einem Schließelement 70, einem ersten Dichtsitz 71 und einem zweiten Dichtsitz 72. Das Ventil umfasst am ersten Dichtsitz 71 ein erstes Dichtelement 11 zur Abdichtung der Prüfkammer 3 von einem Vorraum 8. Das Ventil umfasst ferner am zweiten Dichtsitz ein zweites Dichtelement 12 zur Abdichtung des Referenzraums 6 zum Vorraum 8.

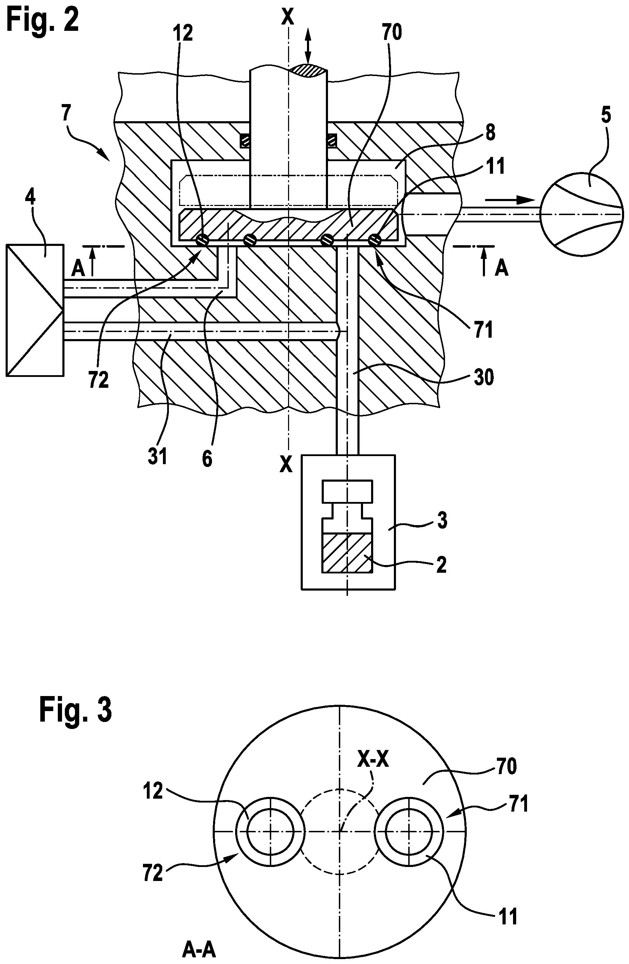

Wie aus Figur 2 ersichtlich ist, sind sowohl das erste Dichtelement 11 als auch das zweite Dichtelement 12 am Ventil 7, genauer am Schließelement 70, angeordnet. Hierbei ist das Schließelement 70 als Kolben ausgeführt, welcher Nuten zur Aufnahme des ersten und zweiten Dichtelements 11, 12 umfasst, welche bodenseitig eingebracht sind.

Figur 2 zeigt dabei den geschlossenen Zustand des Ventils 7. Das Ventil 7 kann mittels eines nicht gezeigten Aktors, z.B. eines pneumatisch wirkenden Aktors oder eines Magnetaktors, in beide Richtungen zum Öffnen und Schließen bewegt werden.

Wie aus Figur 3 ersichtlich ist, sind das erste und zweite Dichtelement 11, 12 als Ringdichtungen ausgebildet und jeweils gleich ausgeführt.

In dem in Figur 2 gezeigten geschlossenen Zustand verschließen das erste und zweite Dichtelement am ersten und zweiten Dichtsitz 71, 72 ohne zusätzlichen Schaltungsaufwand sowohl den Referenzraum 6 als auch die Prüfkammer 3. Wie auch aus Figur 2 ersichtlich ist, ist der Referenzraum 6 als separater Kanal in einem Bauteil vorgesehen, welcher von der Unterseite des Schließelements 70 zum Differenzdrucksensor 4 führt. Ebenso führt eine Leitung 30 zur Prüfkammer 3, wobei eine Abzweigungsleitung 31 von der Leitung 30 abzweigt und zum Differenzdrucksensor 4 führt.

Der Differenzdrucksensor 4 kann somit einerseits den Druck im Referenzraum 6, als auch den Druck in der Prüfkammer 3 über die Abzweigungsleitung 31 und die Leitung 30 erfassen.

Die Funktion der erfindungsgemäßen Anordnung 1 zur Überprüfung einer Dichtheit eines Behältnisses 2 ist dabei wie folgt. In einem ersten Schritt wird das Behältnis 2 in die Prüfkammer 3 eingebracht, wobei in der Prüfkammer 3 noch Umgebungsdruck herrscht. Die Prüfkammer 3 wird abgedichtet und das Ventil 7 geöffnet. Wenn dabei die Druckänderungseinrichtung 5 bereits aktiv ist, wird sich der Druck in der Prüfkammer 3 und im Referenzraum 6 diesem Druck anpassen, also bei einer Vakuumerzeugung durch die Druckänderungseinrichtung 5 wird auch ein Vakuum in der Prüfkammer 3 und dem Referenzraum 6 erzeugt. Ebenso ist es alternativ aber auch möglich, nach Öffnen des Ventiles 7 die Druckänderungseinrichtung 5 erst dann anlaufen zu lassen, und somit die Druckveränderung in der Prüfkammer 3 und dem Referenzraum 6 nachfolgend zu erzeugen.

Das Ventil 7 wird wieder geschlossen, wenn ein vorbestimmter Unterdruck in der Prüfkammer 3 und im Referenzraum 6 erreicht ist und/oder wenn eine vordefinierte Zeiteinheit abgelaufen ist. Dabei schließen das erste und das zweite Dichtelement 11, 12 den Referenzraum 6 und die Prüfkammer 3 gleichzeitig ab, da die beiden Dichtelemente 11, 12 an einer ebenen Bodenseite des Schließelements 70 angeordnet sind. Somit herrscht in der Prüfkammer 3 und im Referenzraum 6 ein gleicher Druck welcher durch den Differenzsensor 4 mit seinen beiden getrennten Sensorkanälen erfasst werden kann.

Sollte nun das Behältnis 2 eine Undichtigkeit aufweisen, so würde durch das austretende Gas oder die austretende Flüssigkeit ein Druckanstieg in der Prüfkammer 3 erfolgen, da der Druck im Behältnis 2 größer ist als der Druck in der Prüfkammer 3. Somit würde der Differenzdrucksensor 4 einen Druckanstieg in der Prüfkammer 3 durch Anzeigen einer Druckdifferenz erfassen. Sollte ein Überdruck in der Prüfkammer 3 erzeugt worden sein, würde der Druck bei einem Riss oder dgl. im Behältnis 2 in der Prüfkammer 3 sinken, da Gas in das Behältnis 2 einströmen würde. Hierbei kann der Differenzdrucksensor 4 dann ebenfalls wieder eine Druckdifferenz zwischen dem Referenzraum 6 und der Prüfkammer 3 erfassen.

Somit können erfindungsgemäß mit einem Hub des Ventils 7 gleichzeitig zwei Ventilfunktionen ausgeführt werden, wobei trotzdem eine hochdichte Abdichtung der Prüfkammer 3 und des Referenzraums 6 ermöglicht wird. Dadurch kann erfindungsgemäß eine hochpräzise Messung von zeitlichen Druckveränderungen in der Prüfkammer relativ zum Referenzraum 6 erfasst werden, so dass bei der Überprüfung einer Dichtheit eines Behältnisses 2 eine hohe Sicherheit sichergestellt ist. Dabei ist erfindungsgemäß nur ein sehr geringer steuerungstechnischer Aufwand notwendig und insbesondere müssen keine zusätzlichen Sicherheitsverschaltungen oder dgl. eingesetzt werden. Die Verwendung des Differenzdruckmessverfahrens ermöglicht dabei eine wesentlich präzisere Druckmessung oder Druckänderungsmessung, als beispielsweise ein Absolutdruck-Messverfahren. Trotzdem kann erfindungsgemäß trotz Verwendung des präziseren DifferenzdruckMessverfahrens ein schalttechnischer Aufwand sehr klein gehalten werden.

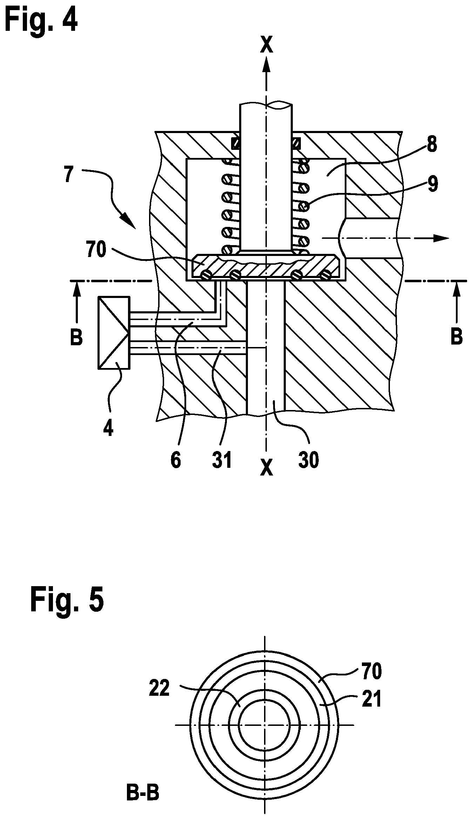

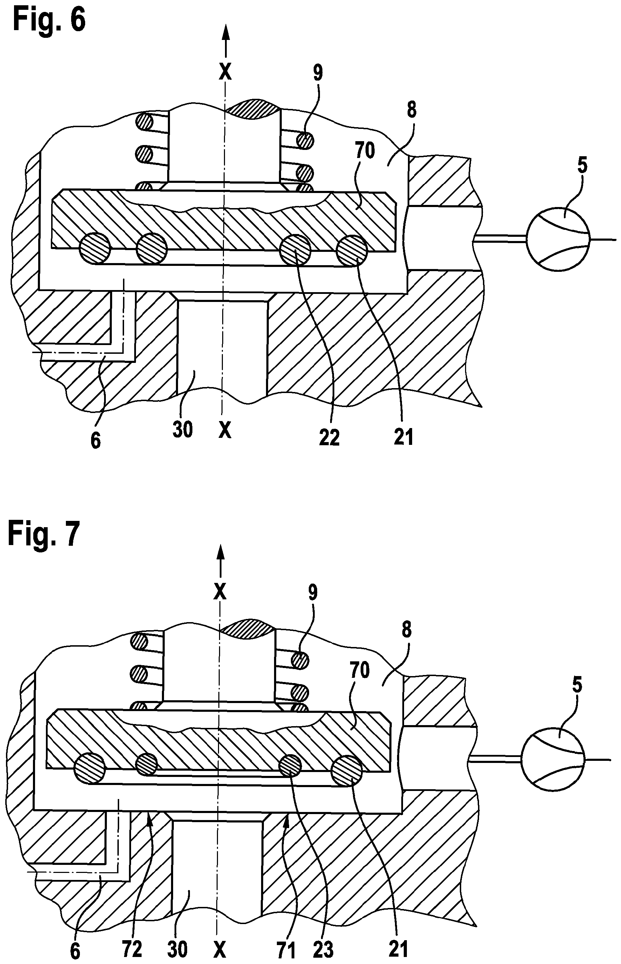

Die Figuren 4 bis 6 zeigen eine Anordnung zur Überprüfung einer Dichtheit eines Behältnisses 2 gemäß einem zweiten Ausführungsbeispiel der Erfindung. Wie insbesondere aus Figur 5 ersichtlich ist, sind beim zweiten Ausführungsbeispiel ein erstes Dichtelement 21 und ein zweites Dichtelement 22 vorgesehen, welche zu einer Mittelachse X-X des Ventils 7 koaxial angeordnet sind. Dabei ist das zweite Dichtelement 22 radial innerhalb des ersten Dichtelements 21 angeordnet (vgl. insbesondere Figur 5). Die Prüfkammer 3 wird dabei mittels des zweiten Dichtelements 22 abgedichtet. Der Referenzraum 6 wird dabei mittels des ersten Dichtelements 21 und des zweiten Dichtelements 22 abgedichtet, da eine Mündung des Referenzraums 6 zwischen diesen beiden Dichtelementen liegt (vgl. Figuren 4 und 6). Die koaxiale Anordnung der beiden Dichtelemente 21, 22 ermöglicht somit einen einfachen Aufbau. Ferner ist beim zweiten Ausführungsbeispiel noch ein Rückstellelement 9 vorgesehen, welches das Ventil bei Nichtbetätigung in der geschlossenen Stellung, die in Figur 4 gezeigt ist, hält. Figur 6 zeigt dagegen die geöffnete Stellung des Ventils 7.

Figur 7 zeigt eine Anordnung 1 zur Überprüfung einer Dichtheit eines Behältnisses 2 gemäß einem dritten Ausführungsbeispiel der Erfindung. Das dritte Ausführungsbeispiel entspricht im Wesentlichen dem zweiten Ausführungsbeispiel, wobei ebenfalls eine koaxiale Anordnung des ersten und zweiten Dichtelements 21, 22 vorhanden ist. Allerdings sind beim dritten Ausführungsbeispiel die Schnurdicken bzw. Querschnitte des ersten Dichtelements 21 und des zweiten Dichtelements 23 unterschiedlich. Das zweite Dichtelement 23 des dritten Ausführungsbeispiels weist eine deutlich geringere Schnurdicke als eine Schnurdicke des ersten Dichtelements 21 auf. Dadurch kann auf einfache Weise ein zeitlich versetztes Verschließen bzw. Abdichten der Prüfkammer 3 und des Referenzraums 6 erhalten werden. Beim dritten Ausführungsbeispiel wird, wie aus Figur 7 ersichtlich ist, beim Schließvorgang zuerst eine Abdichtung am ersten Dichtsitz 71 mittels des ersten Dichtelements 21 erreicht. Da ein Schnurdurchmesser des zweiten Dichtelements 23 kleiner als der des ersten Dichtelements 21 ist, besteht noch eine Verbindung zwischen dem Referenzraum 6 und der Prüfkammer 3, so dass eine gemeinsame Abdichtung von Prüfkammer 3 und Referenzraum 6 gegenüber dem Vorraum 8 vorhanden ist, jedoch die Prüfkammer 3 und der Referenzraum 6 miteinander kommunizieren können. Erst bei vollständig geschlossenem Ventil 7 kommt dann auch das zweite Dichtelement 23 am zweiten Dichtsitz 72 zur Abdichtung, so dass eine Trennung zwischen dem Referenzraum 6 und der Prüfkammer 3 erfolgt ist. Somit können die Öffnungs- und Schließvorgänge in einer gewissen zeitlichen Verzögerung ablaufen. Dadurch kann beim dritten Ausführungsbeispiel ein finaler Druckausgleich zwischen Referenzraum 6 und Prüfkammer 3 unabhängig von Schwankungen eines Drucks im Vorraum 8 ermöglicht werden.

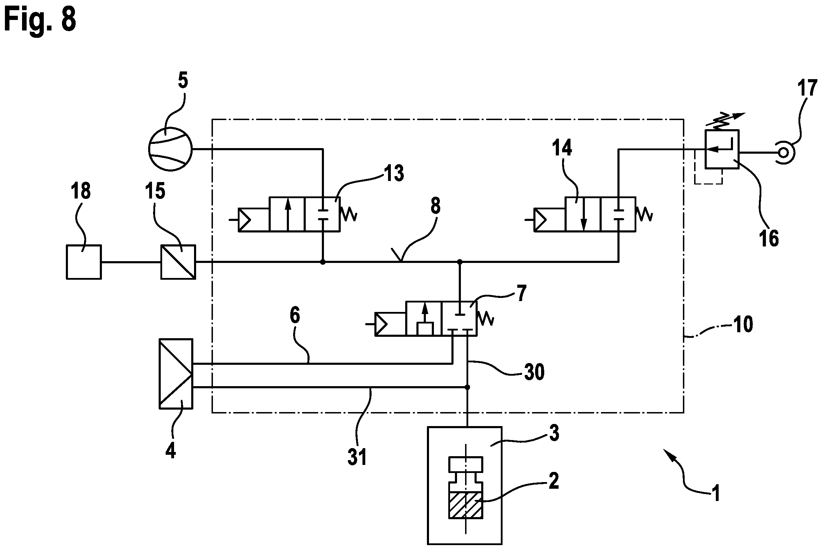

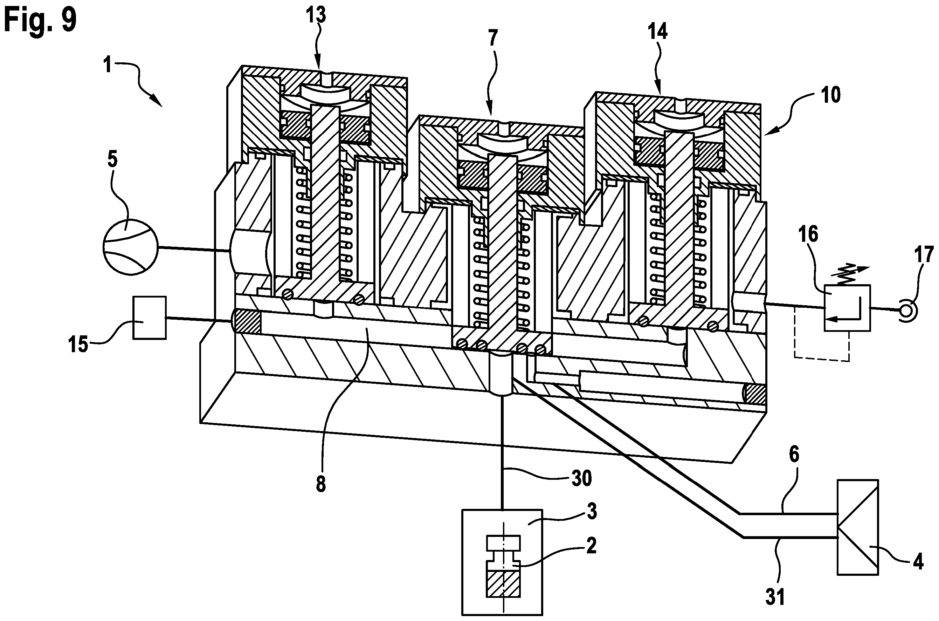

Die Figuren 8 und 9 zeigen eine Anordnung 1 zur Überprüfung einer Dichtheit eines Behältnisses 2 gemäß einem vierten Ausführungsbeispiel der Erfindung.

Das vierte Ausführungsbeispiel entspricht im Wesentlichen dem ersten Ausführungsbeispiel, wobei zusätzlich noch ein Füllventil 13 und ein Entlüftungsventil 14 vorgesehen sind, um die vorgelagerte und/oder die nachgelagerte Grobleckprüfung durchführen zu können. Dazu bilden die Ventile 7 und 13 und 14 einen absperrbaren Vorraum 8 von welchem durch den Absolutdrucksensor 15 der Druck bestimmt werden kann.

Die vorgelagerte Grobleckprüfung mit Vakuum wird wie folgt realisiert: Das Ventil 7 und das Entlüftungsventil 14 sind geschlossen und der Vorraum 8 wird von der Druckänderungseinrichtung 5, welche ein Vakuum erzeugt, über das geöffnete Füllventil 13 auf Unterdruck / Vakuum abgesaugt. Der Absolutdrucksensor 15 misst diesen Unterdruck. Das Absaugen kann bis zum Erreichen eines festgelegten Unterdruckes erfolgen oder durch eine Zeitvorgabe bis zum Schließen des Füllventils 13 bestimmt werden. Nach Schließen des Füllventils 13 bestimmt der Absolutdrucksensor 15 den bestehenden Unterdruck und übergibt diesen Wert an eine Auswerteeinheit 18.

Parallel zu diesem Absaugvorgang in der Vorkammer 8 ist die Prüfkammer 3 mit eingestelltem Behältnis 2 geschlossen worden und hat den Umgebungsdruck. Nach Öffnen des Ventiles 7 erfolgt jetzt ein Druckausgleich in den beiden Kammern und es stellt sich ein neuer gemeinsamer Druck ein, der dem Verhältnis der Ausgangsdrücke und der Kammervolumina entspricht. Dieser sich einstellende gemeinsame Ausgleichsdruck wird ebenfalls vom Absolutdrucksensor 15 gemessen und zur vergleichenden Bewertung mit dem vorher ermittelten Unterdruckmesswert in der Vorkammer 8 und dem Umgebungsdruck an die Auswerteeinheit 18 übergeben. Wenn ein Grobleck im Behältnis 2 vorliegt, wird der sich einstellende gemeinsame Druck höher sein, als ohne ein Grobleck im Behältnis 2, weil der Gasraum im Behältnis 2 eine Vergrößerung des Ausgleichsraumes mit Umgebungsdruck darstellt. Nach der Grobleckprüfung beginnt die eigentliche Feinmessung mit Vakuum oder Überdruck.

Die vorgelagerte Grobleckprüfung mit Überdruck würde abweichend dazu alternativ wie folgt realisiert: Das Ventil 7 und das Füllventil 13 sind geschlossen und der Vorraum 8 wird von der Druckversorgung 17 mit einer zwischengeschalteten Druckregelstufe 16 (Druckregler) über das geöffnete Entlüftungsventil 14 auf Überdruck gebracht. Der Absolutdrucksensor 15 misst diesen Überdruck. Das Füllen kann bis zum Erreichen eines festgelegten Überdruckes erfolgen oder durch eine Zeitvorgabe bis zum Schließen des Entlüftungsventils 14 bestimmt werden. Nach Schließen des Entlüftungsventils 14 bestimmt der Absolutdrucksensor 15 den bestehenden Überdruck und übergibt diesen Wert an eine Auswerteeinheit 18. Parallel zu diesem Befüllvorgang in der Vorkammer 8 ist die Prüfkammer 3 mit eingestelltem Behältnis 2 geschlossen worden und hat den Umgebungsdruck. Nach Öffnen des Messventiles 7 erfolgt jetzt ein Druckausgleich in den beiden Kammern und es stellt sich ein neuer gemeinsamer Druck ein, der dem Verhältnis der Ausgangsdrücke und der Kammervolumina entspricht. Dieser sich einstellende gemeinsame Ausgleichsdruck wird ebenfalls vom Absolutdrucksensor 15 gemessen und zur vergleichenden Bewertung mit dem vorher ermittelten Überdruckmesswert in der Vorkammer 8 und dem Umgebungsdruck an die Auswerteeinheit 18 übergeben. Wenn ein Grobleck im Behältnis 2 vorliegt, wird der sich einstellende gemeinsame Druck geringer sein, als ohne ein Grobleck im Behältnis 2, weil der Gasraum im Behältnis 2 eine Vergrößerung des Ausgleichsraumes mit Umgebungsdruck darstellt. Nach der Grobleckprüfung beginnt die eigentliche Feinmessung mit Vakuum oder Überdruck.

Die nachgelagerte Grobleckprüfung mit Vakuum wird vorzugsweise nach einer Feinmessung mit Überdruck angewendet. Dann ist am Ende des Feinmessvorganges die Prüfkammer 3 mit einem Überdruck versehen. Die Grobleckprüfung wird jetzt wie folgt realisiert: Das Ventil 7 und das Entlüftungsventil 14 sind geschlossen und der Vorraum 8 wird von der Vakuumerzeugungseinheit 5 über das geöffnete Füllventil 13 auf Unterdruck / Vakuum abgesaugt. Der Absolutdrucksensor 15 misst diesen Unterdruck. Das Absaugen kann bis zum Erreichen eines festgelegten Unterdruckes erfolgen oder durch eine Zeitvorgabe bis zum Schließen des Füllventils 13 bestimmt werden. Nach Schließen des Füllventils 13 bestimmt der Absolutdrucksensor 15 den bestehenden Unterdruck und übergibt diesen Wert an eine Auswerteeinheit 18. Nach Öffnen des Messventiles 7 erfolgt jetzt ein Druckausgleich in den beiden Kammern und es stellt sich ein neuer gemeinsamer Druck ein, der dem Verhältnis der Ausgangsdrücke und der Kammervolumina entspricht. Dieser sich einstellende gemeinsame Ausgleichsdruck wird ebenfalls vom Absolutdrucksensor 15 gemessen und zur vergleichenden Bewertung mit dem vorher ermittelten Unterdruckmesswert in der Vorkammer 8 und dem aus der Feinmessung bekannten Überdruckwert in der Prüfkammer 3 an die Auswerteeinheit 18 übergeben. Wenn ein Grobleck im Behältnis 2 vorliegt, wird der sich einstellende gemeinsame Druck höher sein, als ohne ein Grobleck im Behältnis 2, weil der Gasraum im Behältnis 2 eine Vergrößerung des Ausgleichsraumes mit Überdruck darstellt. Nach der Grobleckprüfung ist der Messvorgang beendet.

Die nachgelagerte Grobleckprüfung mit Überdruck wird vorzugsweise nach einer Feinmessung mit Vakuum angewendet. Dann ist am Ende des Feinmessvorganges die Prüfkammer 3 mit einem Vakuum versehen. Die Grobleckprüfung wird jetzt wie folgt realisiert: Das Ventil 7 und das Füllventil 13 sind geschlossen und der Vorraum 8 wird von der Druckversorgung 17 mit einer zwischengeschalteten Druckregelstufe 16 über das geöffnete Entlüftungsventil 14 auf Überdruck gebracht. Der Absolutdrucksensor 15 misst diesen Überdruck. Das Füllen kann bis zum Erreichen eines festgelegten Überdruckes erfolgen oder durch eine Zeitvorgabe bis zum Schließen des Entlüftungsventils 14 bestimmt werden. Nach Schließen des Entlüftungsventils 14 bestimmt der Absolutdrucksensor 15 den bestehenden Überdruck und übergibt diesen Wert an eine Auswerteeinheit 18. Nach Öffnen des Ventils 7 erfolgt jetzt ein Druckausgleich in den beiden Kammern und es stellt sich ein neuer gemeinsamer Druck ein, der dem Verhältnis der Ausgangsdrücke und der Kammervolumina entspricht. Dieser sich einstellende gemeinsame Ausgleichsdruck wird ebenfalls vom Absolutdrucksensor 15 gemessen und zur vergleichenden Bewertung mit dem vorher ermittelten Überdruckmesswert in der Vorkammer 8 und dem aus der Feinmessung bekannten Unterdruckwert in der Prüfkammer 3 an die Auswerteeinheit übergeben. Wenn ein Grobleck im Behältnis 2 vorliegt, wird der sich einstellende gemeinsame Druck geringer sein, als ohne ein Grobleck im Behältnis 2, weil der Gasraum im Behältnis 2 eine Vergrößerung des Ausgleichsraumes mit Vakuum darstellt. Nach der Grobleckprüfung ist der Messvorgang beendet.

Die dargestellte Anordnung 1 stellt eine universelle Ventilschaltung für die verschiedenen Prozessabläufe mit Grobleckprüfung und Feinmessung dar, bei der je nach Toxizität des zu prüfenden Produktes im Behältnis 2 einerseits und einer Anforderung nach kurzen Prüfzyklen andererseits die verschiedensten Ausführungen mit oder ohne das Füllventil 13 und mit oder ohne das Entlüftungsventil 14 realisiert sein können.

Wie weiter aus Figur 9 ersichtlich, sind das Ventil 7, das Füllventil 13 und das Entlüftungsventil 14 in einem Ventilblock 10 angeordnet. Dadurch kann ein besonders kompakter und platzsparender Aufbau der Anordnung 1 erreicht werden.

## Patentansprüche

1. Anordnung zur Überprüfung einer Dichtheit eines Behältnisses (2), umfassend:
- eine Prüfkammer (3), in welcher das zu prüfende Behältnis (2) anordenbar ist,
- eine Druckänderungseinrichtung (5), um einen Druck in der Prüfkammer (3) relativ zu einem Druck im Behältnis (2) zu ändern,
- einen Differenzdrucksensor (4) zur Bestimmung einer Druckdifferenz zwischen einem Referenzdruck in einem Referenzraum (6) und einem Druck in der Prüfkammer (3),
**gekennzeichnet durch**
- ein Ventil (7) mit einem Schließelement (70), einem ersten Dichtsitz (71) und einem zweiten Dichtsitz (72), wobei der erste Dichtsitz (71) ein erstes Dichtelement (11, 21) zur Abdichtung der Prüfkammer (3) zu einem Vorraum umfasst und wobei der zweite Dichtsitz (72) ein zweites Dichtelement (12, 22) zur Abdichtung des Referenzraums (6) zum Vorraum (8) umfasst.

2. Anordnung nach Anspruch 1, **dadurch gekennzeichnet, dass** das erste Dichtelement (11, 21) und/oder das zweite Dichtelement (12, 22) am Schließelement (70) angeordnet sind.

3. Anordnung nach einem der vorhergehenden Ansprüche, **dadurch gekennzeichnet, dass** das erste Dichtelement (11) und das zweite Dichtelement (12) mit gleichem Durchmesser gebildet sind.

4. Anordnung nach Anspruch 1 oder 2, **dadurch gekennzeichnet, dass** das erste Dichtelement (11) und das zweite Dichtelement (12) koaxial zu einer Mittelachse (X-X) des Ventils (7) angeordnet sind.

5. Anordnung nach einem der vorhergehenden Ansprüche, **dadurch gekennzeichnet, dass** das erste Dichtelement (11) und das zweite Dichtelement (12) einen gleichen Querschnitt, insbesondere einen gleichen kreisförmigen Querschnitt, aufweisen.

6. Anordnung nach einem der Ansprüche 1 bis 4, **dadurch gekennzeichnet, dass** das erste Dichtelement (21) einen unterschiedlichen Querschnitt als das zweite Dichtelement (23) aufweist.

7. Anordnung nach einem der vorhergehenden Ansprüche, ferner umfassend ein mit dem Vorraum (8) verbundenes Füllventil (13) und/oder ein mit einer Druckquelle (17) verbundenes Entlüftungsventil (14) und/oder einen Absolutdrucksensor (15) zur Messung eines absoluten Drucks im Vorraum (8).

8. Anordnung nach einem der vorhergehenden Ansprüche, ferner umfassend einen Ventilblock (10) zur Aufnahme aller Bauteile der Anordnung.

9. Verfahren zur Überprüfung einer Dichtheit eines in einer Prüfkammer (3) angeordneten Behältnisses (2), umfassend die Schritte:
- Ändern eines Drucks in der Prüfkammer (3) und in einem Referenzraum (6),
- Abdichten der Prüfkammer (3) und des Referenzraums (6) mittels eines einzigen Ventils (7), wobei das Ventil (7) einen ersten Dichtsitz (71) und einen zweiten Dichtsitz (72) aufweist, wobei die Prüfkammer (3) am ersten Dichtsitz (71) abgedichtet wird und der Referenzraum (6) am zweiten Dichtsitz (72) abgedichtet wird, und
- Vergleichen eines Drucks in der Prüfkammer (3) und eines Drucks im Referenzraum (6) mittels eines Differenzdrucksensors, welcher das Vorhandensein einer Druckdifferenz zwischen dem Prüfraum (3) und dem Referenzraum (6) erfassen kann.

10. Verfahren zum Überprüfen einer Dichtheit eines in einer Prüfkammer angeordneten Behältnisses (2), umfassend die Schritte:
- Ändern eines Drucks in einer Vorkammer (8), in einer Prüfkammer (3) und in einem Referenzraum (6),
- Abdichten der Prüfkammer (3) und des Referenzraumes (6) mittels eines einzigen Ventils (7), wobei das Ventil (7) einen ersten Dichtsitz (71) und einen zweiten Dichtsitz (72) aufweist, wobei die Prüfkammer (3) am ersten Dichtsitz (71) abgedichtet wird und der Referenzraum (6) am zweiten Dichtsitz (72) abgedichtet wird,
- Vergleichen eines sich nach der Kammervereinigung von Vorkammer (8), Prüfkammer (3) und Referenzraum (6) ergebenden gemeinsamen Drucks mit einem Referenzwert zur Bestimmung des Vorhandenseins eines Groblecks in einem Behältnis (2), und
- Vergleichen eines Drucks in der Prüfkammer (3) und eines Drucks im Referenzraum (6) mittels eines Differenzdrucksensors, welcher das Vorhandensein einer Druckdifferenz zwischen der Prüfkammer (3) und dem Referenzraum (6) erfassen kann zur Bestimmung des Vorhandenseins eines Feinlecks in einem Behältnis (2).

11. Verfahren nach Anspruch 9 oder 10, **dadurch gekennzeichnet, dass** das Schließen der Prüfkammer (3) am ersten Dichtsitz (71) und des Referenzraums (6) am zweiten Dichtsitz (72) gleichzeitig erfolgt.

12. Verfahren nach Anspruch 9 oder 10, **dadurch gekennzeichnet, dass** das Schließen der Prüfkammer (3) am ersten Dichtsitz (71) und des Referenzraums (6) am zweiten Dichtsitz (72) nacheinander erfolgt.

13. Verfahren nach Anspruch 12, **dadurch gekennzeichnet, dass** die Prüfkammer (3) und der Referenzraum (6) mittels des Ventils (7) am ersten Dichtsitz (71) zuerst gegenüber einem Vorraum (8) abgedichtet werden, wobei die Prüfkammer (3) und der Referenzraum (6) noch miteinander in Verbindung stehen, und gemeinsam gegenüber dem Vorraum abgedichtet sind, um einen Druckausgleich zwischen der Prüfkammer (3) und dem Referenzraum (6) zu ermöglichen und anschließend der Referenzraum (6) von der Prüfkammer (3) am zweiten Dichtsitz (72) abgedichtet wird.

## Claims

1. Arrangement for checking a tightness of a container (2), comprising:
- a test compartment (3) in which the container (2) to be tested can be arranged,
- a pressure changing device (5) to change a pressure in the test compartment (3) relative to a pressure in the container (2),
- a differential pressure sensor (4) for determining a pressure difference between a reference pressure in a reference chamber (6) and a pressure in the test compartment (3),
**characterized by**
- a valve (7) comprising a closing element (70), a first sealing seat (71), and a second sealing seat (72), the first sealing seat (71) comprising a first sealing element (11, 21) for sealing the test compartment (3) with respect to a pre-chamber and the second sealing seat (72) comprising a second sealing element (12, 22) for sealing the reference chamber (6) with respect to the pre-chamber (8).

2. Arrangement according to claim 1, **characterized in that** the first sealing element (11, 21) and/or the second sealing element (12, 22) are arranged on the closing element (70).

3. Arrangement according to any of the preceding claims, **characterized in that** the first sealing element (11) and the second sealing element (12) have the same diameter.

4. Arrangement according to claim 1 or 2, **characterized in that** the first sealing element (11) and the second sealing element (12) are arranged coaxially with a central axis (XX) of the valve (7).

5. Arrangement according to any of the preceding claims, **characterized in that** the first sealing element (11) and the second sealing element (12) have the same cross section, in particular the same circular cross section.

6. Arrangement according to any of claims 1 to 4, **characterized in that** the first sealing element (21) has a different cross section than the second sealing element (23).

7. Arrangement according to any of the preceding claims, further comprising a filling valve (13) which is connected to the pre-chamber (8), and/or a venting valve (14) which is connected to a pressure source (17), and/or an absolute pressure sensor (15) for measuring an absolute pressure in the pre-chamber (8).

8. Assembly according to any of the preceding claims, further comprising a valve block (10) for accommodating all the components of the assembly.

9. Method for checking a tightness of a container (2) arranged in a test compartment (3), comprising the steps of:
- changing a pressure in the test compartment (3) and in a reference chamber (6),
- sealing the test compartment (3) and the reference chamber (6) by means of a single valve (7), the valve (7) having a first sealing seat (71) and a second sealing seat (72), the test compartment (3) being sealed at the first sealing seat (71) and the reference chamber (6) being sealed at the second sealing seat (72), and
- comparing a pressure in the test compartment (3) and a pressure in the reference chamber (6) by means of a differential pressure sensor which can detect the presence of a pressure difference between the test chamber (3) and the reference chamber (6).

10. Method for checking a tightness of a container (2) arranged in a test compartment, comprising the steps of:
- changing a pressure in a pre-compartment (8), in a test compartment (3), and in a reference chamber (6),
- sealing the test compartment (3) and the reference chamber (6) by means of a single valve (7), the valve (7) having a first sealing seat (71) and a second sealing seat (72), the test compartment (3) being sealed at the first sealing seat (71) and the reference chamber (6) being sealed at the second sealing seat (72),
- comparing a common pressure resulting from the compartment combination of the pre-compartment (8), the test compartment (3), and the reference chamber (6) with a reference value in order to determine the presence of a gross leak in a container (2), and
- comparing a pressure in the test compartment (3) and a pressure in the reference chamber (6) by means of a differential pressure sensor which can detect the presence of a pressure difference between the test chamber (3) and the reference chamber (6) in order to determine the presence of a fine leak in a container (2).

11. Method according to claim 9 or 10, **characterized in that** the closing of the test compartment (3) at the first sealing seat (71) and the closing of the reference chamber (6) at the second sealing seat (72) take place simultaneously.

12. Method according to claim 9 or 10, **characterized in that** the closing of the test compartment (3) at the first sealing seat (71) and the closing of the reference chamber (6) at the second sealing seat (72) take place consecutively.

13. Method according to claim 12, **characterized in that** the test compartment (3) and the reference chamber (6) are first sealed with respect to a pre-chamber (8) by means of the valve (7) at the first sealing seat (71), the test compartment (3) and the reference chamber (6) still being interconnected, and being jointly sealed with respect to the pre-chamber in order to enable pressure equalization between the test compartment (3) and the reference chamber (6), and the reference chamber (6) then being sealed with respect to the test compartment (3) at the second sealing seat (72).

## Revendications

1. Agencement de contrôle d'une étanchéité d'un récipient (2), comprenant:
- une chambre de contrôle (3) dans laquelle le récipient (2) à contrôler peut être disposé,
- un dispositif de changement de pression (5) pour changer une pression dans la chambre de contrôle (3) par rapport à une pression régnant dans le récipient (2),
- un capteur de pression différentielle (4) destiné à déterminer une différence de pression entre une pression de référence régnant dans une chambre de référence (6) et une pression régnant dans la chambre de contrôle (3),
**caractérisé par**
- une soupape (7) ayant un élément de fermeture (70), un premier siège d'étanchéité (71) et un deuxième siège d'étanchéité (72), dans lequel le premier siège d'étanchéité (71) présente un premier élément d'étanchéité (11, 21) pour rendre étanche le chambre de contrôle (3) par rapport à une antichambre et dans lequel le deuxième siège d'étanchéité (72) comprend un deuxième élément d'étanchéité (12, 22) pour rendre étanche la chambre de référence (6) par rapport à l'antichambre (8).

2. Agencement selon la revendication 1, **caractérisé par le fait que** le premier élément d'étanchéité (11, 21) et/ou le deuxième élément d'étanchéité (12, 22) sont disposés sur l'élément de fermeture (70).

3. Agencement selon l'une quelconque des revendications précédentes, **caractérisé par le fait que** le premier élément d'étanchéité (11) et le deuxième élément d'étanchéité (12) sont réalisés avec le même diamètre.

4. Agencement selon la revendication 1 ou 2, **caractérisé par le fait que** le premier élément d'étanchéité (11) et le deuxième élément d'étanchéité (12) sont disposés coaxialement à un axe central (X-X) de la soupape (7).

5. Agencement selon l'une quelconque des revendications précédentes, **caractérisé par le fait que** le premier élément d'étanchéité (11) et le deuxième élément d'étanchéité (12) présentent une même section transversale, en particulier une même section transversale circulaire.

6. Agencement selon l'une quelconque des revendications 1 à 4, **caractérisé par le fait que** le premier élément d'étanchéité (21) présente une section transversale différente de celle du deuxième élément d'étanchéité (23) .

7. Agencement selon l'une quelconque des revendications précédentes, comprenant en outre une soupape de remplissage (13) reliée à l'antichambre (8) et/ou une soupape de purge (14) reliée à une source de pression (17) et/ou un capteur de pression absolue (15) destiné à mesurer une pression absolue dans l'antichambre (8).

8. Agencement selon l'une quelconque des revendications précédentes, comprenant en outre un bloc de soupapes (10) pour recevoir l'ensemble des composants de l'agencement.

9. Procédé de contrôle d'une étanchéité d'un récipient (2) disposé dans une chambre de contrôle (3), comprenant les étapes consistant à:
- modifier une pression dans la chambre de contrôle (3) et dans une chambre de référence (6),
- rendre étanche la chambre de contrôle (3) et la chambre de référence (6) au moyen d'une seule soupape (7), dans lequel ladite soupape (7) présente un premier siège d'étanchéité (71) et un deuxième siège d'étanchéité (72), dans lequel la chambre de contrôle (3) est rendue étanche sur le premier siège d'étanchéité (71) et la chambre de référence (6) est rendue étanche sur le deuxième siège d'étanchéité (72), et
- comparer une pression régnant dans la chambre de contrôle (3) et une pression régnant dans la chambre de référence (6) au moyen d'un capteur de pression différentielle qui peut détecter la présence d'une différence de pression entre la chambre de contrôle (3) et la chambre de référence (6).

10. Procédé de contrôle d'une étanchéité d'un récipient (2) disposé dans une chambre de contrôle (3), comprenant les étapes consistant à:
- modifier une pression dans une antichambre (8), dans une chambre de contrôle (3) et dans une chambre de référence (6),
- rendre étanche la chambre de contrôle (3) et la chambre de référence (6) au moyen d'une seule soupape (7), dans lequel ladite soupape (7) présente un premier siège d'étanchéité (71) et un deuxième siège d'étanchéité (72), dans lequel la chambre de contrôle (3) est rendue étanche sur le premier siège d'étanchéité (71) et la chambre de référence (6) est rendue étanche sur le deuxième siège d'étanchéité (72),
- comparer une pression commune qui résulte après avoir uni l'antichambre (8), la chambre de contrôle (3) et la chambre de référence (6) et présente une valeur de référence pour déterminer la présence d'une fuite grossière dans un récipient (2), et
- comparer une pression régnant dans la chambre de contrôle (3) et une pression régnant dans la chambre de référence (6) au moyen d'un capteur de pression différentielle qui peut détecter la présence d'une différence de pression entre la chambre de contrôle (3) et la chambre de référence (6) pour déterminer la présence d'une fuite fine dans un récipient (2).

11. Procédé selon la revendication 9 ou 10, **caractérisé par le fait que** la fermeture de la chambre de contrôle (3) sur le premier siège d'étanchéité (71) et de la chambre de référence (6) sur le deuxième siège d'étanchéité (72) s'effectue simultanément.

12. Procédé selon la revendication 9 ou 10, **caractérisé par le fait que** la fermeture de la chambre de contrôle (3) sur le premier siège d'étanchéité (71) et de la chambre de référence (6) sur le deuxième siège d'étanchéité (72) s'effectue l'une après l'autre.

13. Procédé selon la revendication 12, **caractérisé par le fait que** la chambre de contrôle (3) et la chambre de référence (6) sont d'abord rendues étanches par rapport à une antichambre (8) au moyen de la soupape (7) sur le premier siège d'étanchéité (71), dans lequel la chambre de contrôle (3) et la chambre de référence (6) sont encore en communication l'une avec l'autre et sont rendues étanches en commun par rapport à l'antichambre afin de permettre un équilibrage de pression entre la chambre de contrôle (3) et la chambre de référence (6), et puis la chambre de référence (6) est rendue étanche par rapport à la chambre de contrôle (3) sur le deuxième siège d'étanchéité (72).
